# EUROPEAN PATENT SPECIFICATION

(11) **EP 3 674 679 B1**
(45) Date of publication and mention of the grant of the patent: **02.08.2023**
(21) Application number: 20158194.9
(22) Date of filing: 13.04.2018
(51) Int. Cl.: G01M 7/08, G01M 17/007, G09B 23/32

(54) **NECK ASSEMBLY FOR ANTHROPOMORPHIC TEST DEVICE**
HALSANORDNUNG FÜR ANTHROPOMORPHE TESTVORRICHTUNG
ENSEMBLE COL POUR DISPOSITIF D'ESSAI ANTHROPOMORPHIQUE

(30) Priority: 18.04.2017 US 201762486562 P; 21.12.2017 US 201715850153
(43) Date of publication of application: 01.07.2020
(62) Divisional of application: 18167334.4
(73) Proprietor: Humanetics Innovative Solutions, Inc., Plymouth, MI 48170 (US)
(72) Inventor: WANG, Zhenwen Jerry, Farmington Hills, MI Michigan 48331 (US); ISOPI, Dominic, Livonia, MI Michigan 48152 (US)
(74) Representative: Manitz Finsterwald Patent- und Rechtsanwaltspartnerschaft mbB

(56) References cited:
- EP-A1- 3 040 961
- CN-A- 106 217 354
- GB-A- 2 344 922

## Description

### CROSS-REFERENCE TO RELATED APPLICATION(S)

The present application claims the benefit of US Provisional Patent Application No. 62/486,562, filed April 18, 2017, and is a continuation-in-part of U.S. Patent Application No. 14/981,034, filed December 28, 2015.

### BACKGROUND OF THE INVENTION

### 1. Field of the invention

The present invention relates generally to an Anthropomorphic Test Device (ATD) and, more particularly, to a neck assembly for an ATD that can be used to assess and predict injuries under impact.

### 2. Description of the Related Art

CN 106217354 A discloses a multi-segment bionic multi-degree-of-freedom spine structure of humanoid robot. EP 3 040 961 A1 discloses an omnidirectional neck assembly for a crash test dummy including a plurality of vertebra discs, a plurality of ligament joints each having a joint element disposed between the vertebra disc, the vertebra discs having a profile that can simulate angles of a human neck in all directions. GB 2 344 922 A discloses a spine for a crash test dummy comprising a plurality of substantially non-resilient vertebrae which are aligned and which are separated by elements of resilient material. Automotive, aviation, military, and other vehicle manufacturers conduct a wide variety of collision, ejection and under-body-blast (UBB) testing to measure the effects of an impact upon a vehicle and its occupants. Through the testing, a vehicle manufacturer gains valuable information that can be used to improve the impact worthiness of the vehicle.

lmpact testing often involves the use of anthropomorphic test devices, better known as "crash test dummies." During the testing, an operator places a crash test dummy inside a vehicle, and the vehicle undergoes a simulated collision, UBB, or ejection. The testing exposes the crash test dummy to high inertial loading, and sensors inside the crash test dummy, such as load cells, displacement sensors, accelerometers, pressure gauges, angular rate sensors, and the like, generate electrical signals of data corresponding to the loading. Cables or wires transmit these electrical signals of data to a data acquisition system (DAS) for subsequent processing. This data reveals information about the effects of the impact on the crash test dummy and can be correlated to the effects a similar impact would have on a human occupant.

In order to obtain more accurate test data, test engineers attempt to maximize what is known as the "biofidelity" of the crash test dummy. Biofidelity is a measure of how well the crash test dummy reacts like a human being in a vehicle impact test environment. A crash test dummy reacting as an actual human during a collision is said to have a high biofidelity. Accordingly, a crash test dummy having a high biofidelity will provide more accurate information from a collision test relative to the effect of the collision on a human being. Thus, ATD engineers design crash test dummies with the proper anthropometry that reflects a total weight, center of gravity, mass moment of inertia and range of motion similar to that of a human body so as to increase the biofidelity of the crash test dummy.

It is known to provide a neck for a crash test dummy. In one crash test dummy, the neck has a cylindrical design with grooves around the neck. A groove depth and angle are used to control a performance of the neck. While this neck provides good flexion and rear extension performance, it lacks the ability to adjust a lateral performance. In another crash test dummy, the neck has good lateral performance, but its flexion and extension performance were not so good and cannot be adjusted easily due to its axial symmetrical mechanical design.

From a biomechanics research study, a human neck has different performance in forward flexion and lateral bending. The bending stiffness are similar between the two directions up to a certain angles, where the frontal and lateral bending start to differentiate each other. However, when forward flexion reaches eighty degrees (80°) bending, the neck bottoms out and the stiffness increases quickly. For lateral bending, the neck bottoms out near fifty degrees (50°).

It has been difficult to replicate a human neck for an ATD. In particular, a neck was needed to be developed to be unique for ATD's due to different responses in each direction. As a result, it is an object of the present invention to develop a neck for an ATD that can perform like a human neck for flexion, extension, lateral bending, and torsion. Therefore, there is a need in the art to provide a neck assembly for use in an ATD so that biofidelity of the ATD is improved.

### SUMMARY OF THE INVENTION

The solution of this object is achieved by the features of claim 1. The dependent claims contain advantageous embodiments of the present invention. Accordingly, the present invention provides a neck assembly for an ATD. The neck assembly includes a plurality of vertebra discs. The neck assembly also includes a plurality of ligament joints each having a joint element disposed between the vertebra discs. The neck assembly further includes a torsion element coupled on one of the vertebra discs to allow rotation about an axis of the one of the vertebra discs to simulate torsion response of a human neck.

In addition, the present invention provides an ATD including a body and a neck assembly connected to the body. The neck assembly includes a plurality of vertebra discs and a plurality of ligament joints each having a joint element disposed between the vertebra discs, and a torsion assembly coupled to one of the vertebra discs to allow rotation about an axis of the one of the vertebra discs to simulate torsion response of a human neck.

One advantage of the present invention is that a new neck assembly is provided for an ATD. Another advantage of the present invention is that the neck assembly for an ATD can simulate a human neck's biomechanical performance. Yet another advantage of the present invention is that the neck assembly for an ATD simulates a human neck in all directions. Still another advantage of the present invention is that the neck assembly for an ATD can meet biomechanical response requirements in flexion, extension, lateral bending, and torsion. A further advantage of the present invention is that the neck assembly for an ATD follows a human neck vertebra curvature posture. Yet a further advantage of the present invention is that the neck assembly for an ATD includes inserts having a profile that reduces the amount of neck lateral rotation for early bottoming out. A still further advantage of the present invention is that the neck assembly for an ATD includes inserts having a tunable profile that allows the neck to perform differently in flexion and lateral bending. Another advantage of the present invention is that the ligament joints have a cone-shaped cross-section to evenly distribute the load like a human. Yet another advantage of the present invention is that the neck assembly has superior biofidelity response and reduced complexity to make it user friendly.

Other features and advantages of the present invention will be readily appreciated, as the same becomes better understood, after reading the subsequent description taken in conjunction with the accompanying drawings.

### BRIEF DESCRIPTION OF THE DRAWINGS

FIG. 1 is a perspective view of an ATD.
FIG. 2 is another perspective view of the ATD of FIG. 1.
FIG. 3 is a perspective view of a neck assembly, according to one embodiment of the present invention, for the ATD of FIGS. 1 and 2.
FIG. 4 is a side elevational view of the neck assembly of FIG. 3.
FIG. 5 is a front elevational view of the neck assembly of FIG. 3.
FIG. 6 is a bottom view of the neck assembly of FIG. 3.
FIG. 7 is a top view of the neck assembly of FIG. 3.
FIG. 8 is a sectional view taken along line 8-8 of FIG. 7.
FIG. 9 is a sectional view taken along line 8-8 of FIG. 7.
FIG. 10 is a perspective view of a torsion element of the neck assembly of FIG. 3.

### DESCRIPTION OF THE PREFERRED EMBODIMENT(S)

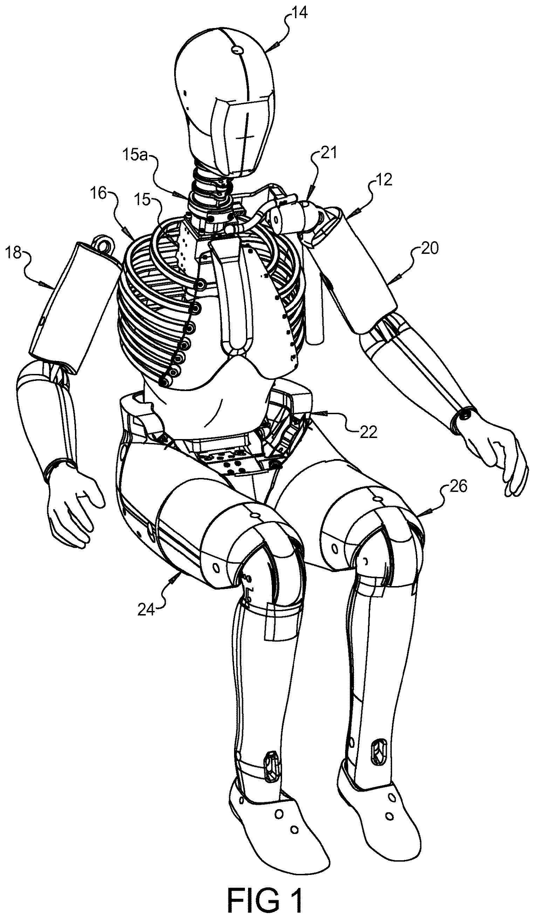

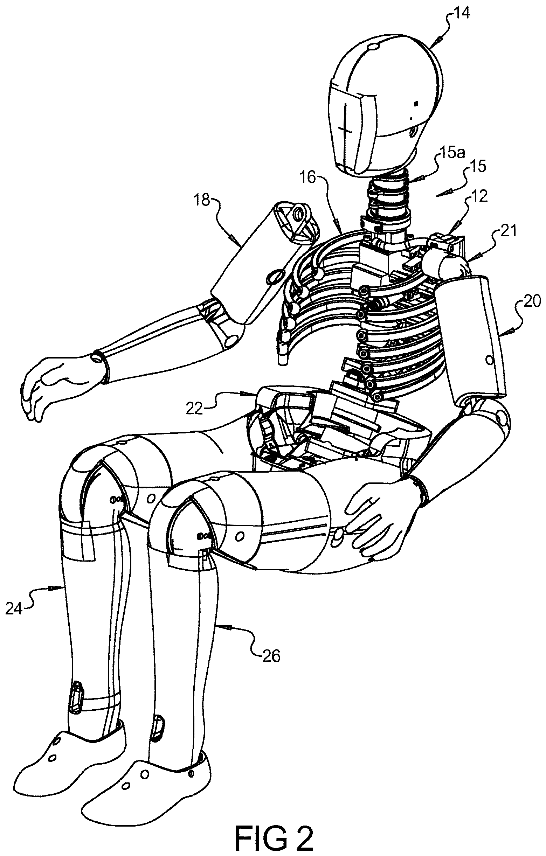

Referring to the drawings and in particular FIGS. 1 and 2, one embodiment of an ATD, for example a crash test dummy, according to the present invention, is generally indicated at 12. In one embodiment, the crash test dummy 12 is of a fiftieth percentile (50%) male type and is illustrated in a sitting posture. The size and weight of the crash test dummy 12 are based on anthropometric studies, which are typically done separately by the following organizations, University of Michigan Transportation Research Institute (UMTRI), U.S. Military Anthropometry Survey (ANSUR), and Civilian American and European Surface Anthropometry Resource (CESAR). It should be appreciated that ranges of motions, centers of gravity, and segment masses simulate those of human subjects defined by the anthropometric data. It should also be appreciated that the crash test dummy 12 may be of any suitable size.

As illustrated in FIG. 1, the crash test dummy 12 includes a head assembly, generally indicated at 14. The head assembly 14 includes a one-piece plastic skull, an instrumentation core, and a vinyl skin. The instrumentation core is removable for access to head instrumentation contained inside the head assembly 14. The crash test dummy 12 also includes a spine assembly 15 having a neck assembly 15a with an upper end mounted to the head assembly 14 by a nodding block (not shown) and a nodding joint (not shown) of the spine assembly 15. The neck assembly 15a has a lower end extending into a torso area of the crash test dummy 12 and is connected to a spine mounting weldment (not shown) by an adapter assembly (not shown). The spine assembly 15 extends downwardly to a pelvis assembly 22 to be described. An example of a neck assembly is disclosed in U.S. Patent Application No. 14/98l,034.

The torso area of the crash test dummy 12 includes a rib cage assembly, generally indicated at 16, connected to the spine assembly 15. The crash test dummy 12 also has a pair of arm assemblies including a right arm assembly, generally indicated at 18, and a left arm assembly, generally indicated at 20, which are attached to the crash test dummy 12 via a shoulder assembly, generally indicated at 21. The left arm assembly 20 includes a clavicle link (not shown), which connects a clavicle (not shown) to the top of the spine assembly 15. It should be appreciated that the right arm assembly 18 is constructed in a similar manner.

The crash test dummy 12 also includes a pelvis assembly 22 connected to the pelvic adapter. The crash test dummy 12 includes a right leg assembly 24 and a left leg assembly 26, which are attached to the pelvis assembly 22. It should be appreciated that various components of the crash test dummy 12 may be covered in a polyvinyl skin such as a flesh and skin assembly to achieve a good biofidelity of the crash test dummy 12.

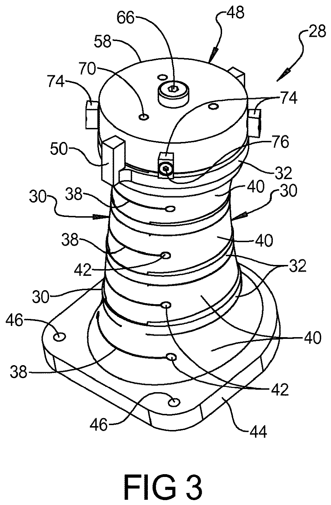

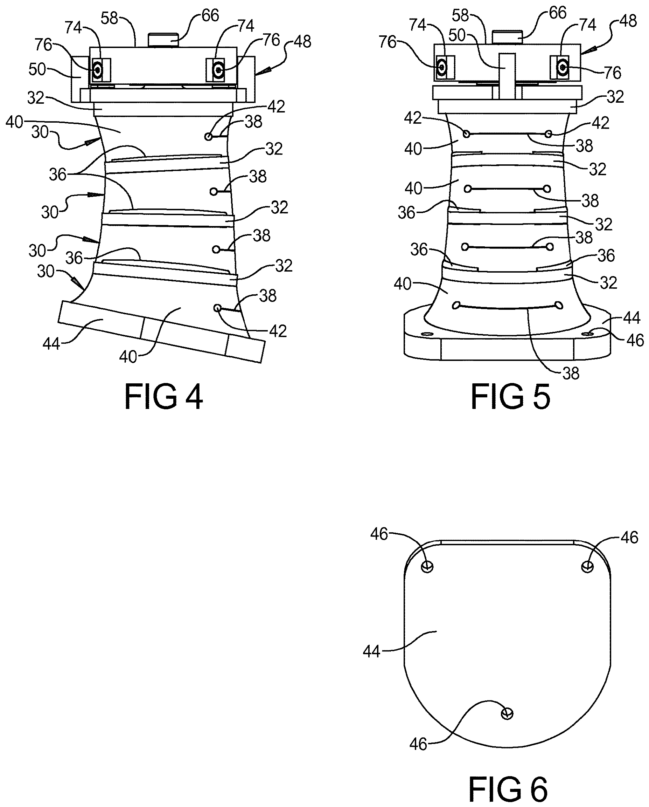

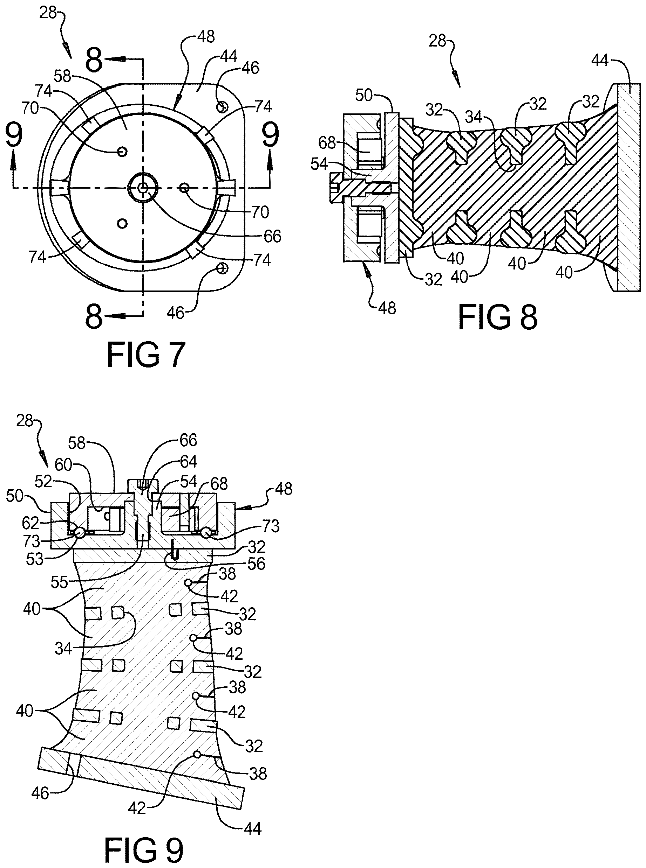

Referring to FIGS. 3-9, one embodiment of a neck assembly 28, according to the present invention, is shown to replace the neck assembly 15a. The neck assembly 28 represents a human neck. The neck assembly 28 includes a plurality of modular vertebra segments, generally indicated at 30. In the embodiment illustrated, the neck assembly 28 has four (4) cervical spine vertebra segments 30. As illustrated in FIGS. 3-5, each vertebra segment 30 includes a vertebra disc 32 having a height or thickness corresponding to its location in the cervical of the neck assembly 28. In one embodiment, the vertebra disc 32 is made of a relatively rigid material such as metal or hard plastic. The vertebra disc 32 includes at least one aperture 34 extending axially therethrough. In the embodiment illustrated, the aperture 34 is centrally located within the vertebra disc 32. The vertebra disc 32 is generally circular in shape, but may be any suitable shape to simulate a human neck. The vertebra disc 32 has one or more raised portions 36 on at least one side thereof. In the embodiment illustrated, the vertebra disc 32 has a pair of opposed raised portions 36 on both sides thereof. The raised portions 36 are generally arcuate in shape. The raised portions 36 have a varying height with a greatest height in a middle thereof and reducing in height to the ends thereof. It should be appreciated that the raised portions 36 of the vertebra disc 32 will be located on the sides of the neck assembly 28. It should also be appreciated that it is intended to limit the lateral range of motion since a human neck lateral bending angle is less than that of its flexion.

Referring to FIGS. 3-5, each vertebra segment 30 includes a ligament joint 38 disposed between adjacent vertebra discs 32. In the embodiment illustrated, one ligament joint 38 is disposed between a pair of vertebra discs 32. As illustrated, each ligament joint 38 has a joint element 40 disposed between a pair of the vertebra discs 32. The joint element 40 is made of a flexible material such as an elastomeric material, for example, rubber. In one embodiment, the joint element 40 has a frusto-conical shape. The joint element 40 is connected to an upper vertebra disc 32 and a lower vertebra disc 32 via a suitable mechanism such as an adhesive. It should be appreciated that each ligament joint 38 is integral and one-piece.

The joint element 40 includes a cutout 42 on a front side to soften the neck assembly 28 to meet the extension performance for different spine curvature. The stiffness of the human neck rearward extensions is typically softer than that of its forward flexion. The cutouts 42 are located on a front side of the neck assembly 28 in the joint element 40 between the vertebra discs 32. In the embodiment illustrated, the cutouts 42 are a round cylindrical cavity, which is molded into the joint element 40, but may be any suitable shape. In one embodiment, a shape blade can be used to cut a through round hole. This process is to facilitate rubber manufacturing and also improve the durability of the neck assembly 28. It should be appreciated that the mold hole will prevent rubber tearing during testing. It should also be appreciated that, with this feature, the forward neck flexion performance would remain the same due to the compression on the front side of the neck assembly 28. It should further be appreciated that, for extension, the side with stiffness reduction will be in tension, the cutouts 42 will open up and therefore reduce the amount of materials engaged in bending. It should still further be appreciated that the stiffness is reduced accordingly.

The neck assembly 28 includes a lower mounting plate 44 connected to the spine assembly by a suitable mechanism such as fasteners (not shown). In one embodiment, the lower mounting plate 44 has a plurality of apertures 46 extending therethrough to receive the fasteners. The neck assembly 28 includes one of the upper vertebra discs 32 at an upper end of one of the ligament joints 40. In this embodiment, the upper vertebra disc 32 has a planar upper surface. It should be appreciate that the neck assembly 28 has a cross-section that is increased gradually from the top to the bottom since the load is higher toward the bottom of the neck when the head is impacted in a crash.

Referring to FIGS. 3-10, the neck assembly 28 also includes a torsion assembly, generally indicated at 48, to simulate neck torsion response. The torsion assembly 38 includes a bottom member 50. The bottom member 50 is generally circular in shape. The bottom member 50 has a cavity 52 extending axially therein. The bottom member 50 also has a groove 53 extending axially therein and circumferentially thereabout a bottom of the cavity 52 to form a bottom race which hosts a ball bearing or roller 73 between the bottom member 50 and a top member 58 to be described. The bottom member 50 includes a center protrusion 54 extending axially from a bottom of the cavity 52. The bottom member 50 is made of rigid material. The bottom member 50 is disposed on the planar surface of and coupled to the upper vertebra disc 32 by a suitable mechanism such as a fastener 56.

The torsion assembly 48 includes a top member 58 cooperating with and rotatable relative to the bottom member 50. The top member 58 is generally circular in shape. The top member 58 has a cavity 60 extending axially therein to accommodate the ball bearing or roller 73. The top member 58 also has a groove 62 extending axially therein and circumferentially thereabout a top of the cavity 60 to form a top race. The top member 58 has an aperture 64 extending axially therethrough. The torsion assembly 48 includes a fastener 66 extending through the aperture 64 and into the aperture 55 of the bottom member 50. It should be appreciated that the fastener 66 allow the top member 58 to rotate relative to the bottom member 50 about an axis extending axially through the fastener 66. It should be appreciated that the top member 58 is connected to the head assembly 14 by a suitable mechanism such as fasteners.

The torsion assembly 48 includes a torsion element 68 disposed between the bottom member 50 and the top member 58. The torsion element 68 has a first ring portion 170 disposed about the protrusion 54 of the bottom member 50. The torsion member 68 has a second ring portion 72 spaced radially from the first ring portion 170 and interconnected by a plurality of spoke portions 174 spaced circumferentially and extending radially between the first ring portion 170 and the second ring portion 72. The torsion element 68 is coupled to the top member 58 by a suitable mechanism such as a plurality of pins 70. The torsion element 68 is made of a flexible material such as an elastomeric material, for example rubber, to provide a low resistance. The torsion element 68 is integral, unitary, and one-piece. The outer ring 72 is bonded to the bottom member 50 and the inner ring 170 is bonded to center protrusion 54.

The torsion assembly 48 includes a plurality of rollers 73 disposed between the bottom member 50 and the top member 58. The rollers 73 are generally spherical in shape. The rollers 73 are disposed in the bottom race 53 and top race 62 of the bottom member 50 and top member 58, respectively. It should be appreciated that the rollers 73 provide minimum friction and assist relative movement between the bottom member 50 and top member 58.

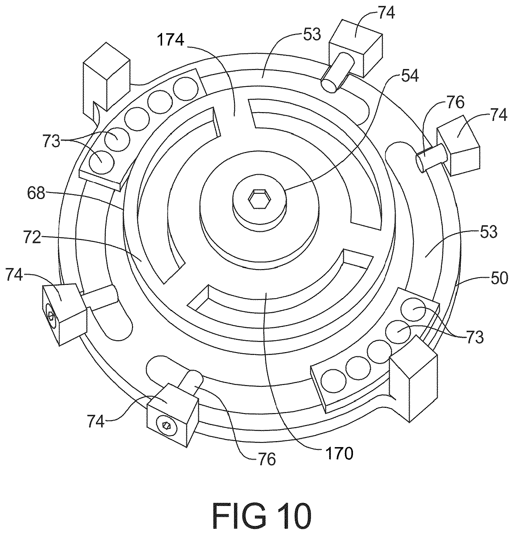

The torsion assembly 48 includes a plurality of torsion stops 74 to limit angular rotation of the top member 58 relative to the bottom member 50. The torsion stops 74 are spaced circumferentially about the top member 58. Each torsion stop 74 includes a fastener 76 extending into a space between the bottom race 53 and top race 62 to be engaged by the rollers 73. As illustrated in FIG. 10, the torsion stops 74 limit the range of rotation up to approximately fifty (50) degrees. When the rotation reaches the predetermined maximum range of rotation, the modular vertebra segments 30 of the neck assembly 28 will then be engaged to generate a proper human like neck torsion response. With the additional torsion element 68, the neck assembly 28 will be able to respond in a low torsion resistance up to approximately fifty (50) degrees when the torsion stops 74 will be engaged. This low torsion will also be sufficient to bring the neck assembly 28 back to its normal orthogonal position when external load is removed. It should be appreciated that the neck assembly 28 has similar flexion and biomechanical response up to approximately fifty-five (55) degrees.

The present invention has been described in an illustrative manner. It is to be understood that the terminology, which has been used, is intended to be in the nature of words of description rather than of limitation.

Many modifications and variations of the present invention are possible in light of the above teachings. Therefore, the present invention may be practiced other than as specifically described.

## Claims

1. An anthropomorphic test device (ATD) comprising:
a body;
a neck assembly (28) connected to said body; and
said neck assembly (28) comprising a plurality of vertebra discs (32) and a joint element (40) disposed between each respective pair of said vertebra discs (32), and a torsion assembly (48) including a bottom member (50) coupled to one of said vertebra discs (32) and a top member (58) cooperating with and rotatable relative to said bottom member (50) to allow rotation about an axis of said one of said vertebra discs (32) to simulate torsion response of a human neck,
said torsion assembly (48) includes a torsion element (68) disposed between said bottom member (50) and said top member (58), and wherein said torsion element (68) has a first ring portion (170) disposed about a protrusion (54) of said bottom member (50) and a second ring portion (72) interconnected to and spaced radially from said first ring portion (170);
the anthropomorphic test device (ATD) being further **characterized in that** said second ring portion (72) is bonded to said bottom member (50) and said first ring portion (170) is bonded to said protrusion (54).

2. An anthropomorphic test device (ATD) as set forth in claim 1, wherein said torsion assembly (48) includes a plurality of rollers (73) disposed between said bottom and top member (50, 58).

3. An anthropomorphic test device (ATD) as set forth in claim 1, wherein said first and second ring portions (170, 72) are interconnected by a plurality of spoke portions (174) spaced circumferentially and extending radially between said first ring portion (170) and said second ring portion (172).

4. An anthropomorphic test device (ATD) as set forth in claim 1 or claim 3,
wherein each of said bottom member (50) and said top member (58) have a cavity (60, 52) extending respectively axially therein,
wherein said bottom member (50) includes a groove (53) extending axially therein and circumferentially thereabout a bottom of said cavity (52) of said bottom member (50) to form a bottom race,
wherein said top member (58) includes a groove (62) extending axially therein and circumferentially thereabout a top of said cavity (60) of said top member (58) to form a top race, and
wherein said torsion assembly (48) includes a plurality of rollers (73) disposed in said bottom race and said top race between said bottom member (50) and said top member (58).

5. An anthropomorphic test device (ATD) as set forth in any one preceding claim, wherein said torsion element (68) is coupled to said top member (58) by a plurality of pins (70).

6. An anthropomorphic test device (ATD) as set forth in any one of claims 1, 2, and 4-5, wherein said torsion element (68) is made of a flexible material.

7. An anthropomorphic test device (ATD) as set forth in any one of claims 1, 2, and 4-6, wherein each of said vertebra discs (32) include at least one raised portion (36) on at least one side thereof.

8. An anthropomorphic test device (ATD) as set forth in any one of claims 1, 2, and 4-6 and optionally wherein said at least one raised portion (36) is generally arcuate in shape.

9. An anthropomorphic test device (ATD) as set forth in any one of claims 1, 2, and 4-7, wherein said vertebra discs (32) have a profile that can simulate angles of the human neck in all directions.

10. An anthropomorphic test device (ATD) as set forth in claim 9 wherein said profile varies in height with a greatest height being in a middle thereof and reducing in height toward ends thereof.

11. An anthropomorphic test device (ATD) as set forth in any one of claims 1, 2, and 4-10, wherein said joint element (40) includes at least one cutout (42) on at least one side thereof.

12. An anthropomorphic test device (ATD) as set forth in claim 11, wherein said at least one cutout (42) is on a front side of said joint element (40).

13. An anthropomorphic test device (ATD) as set forth in any one of claims 1, 2, and 4-12 wherein said torsion assembly (48) further includes a plurality of torsion stops (174) to limit a range of rotation of said neck assembly (28).

14. An anthropomorphic test device (ATD) as set forth in claim 13, wherein said range of rotation is up to approximately fifty (50) degrees.

## Patentansprüche

1. Anthropomorphe Testvorrichtung (ATD), umfassend:
einen Körper;
eine mit dem Körper verbundene Halsanordnung (28); und
wobei die Halsanordnung (28) eine Vielzahl von Wirbelscheiben (32) und ein Gelenkelement (40), das zwischen jedem jeweiligen Paar der Wirbelscheiben (32) angeordnet ist, und eine Torsionsbaugruppe (48) umfasst, die ein unteres Element (50), das mit einer der Wirbelscheiben (32) gekoppelt ist, und ein oberes Element (58) umfasst, das mit dem unteren Element (50) zusammenwirkt und relativ zu diesem drehbar ist, um eine Drehung um eine Achse der einen der Wirbelscheiben (32) zu ermöglichen, um ein Torsionsansprechen eines menschlichen Halses zu simulieren,
wobei die Torsionsanordnung (48) ein Torsionselement (68) umfasst, das zwischen dem unteren Element (50) und dem oberen Element (58) angeordnet ist, und wobei das Torsionselement (68) einen ersten Ringabschnitt (170), der um einen Vorsprung (54) des unteren Elements (50) angeordnet ist, und einen zweiten Ringabschnitt (72) aufweist, der mit dem ersten Ringabschnitt (170) verbunden und radial davon beabstandet ist;
wobei die anthropomorphe Testvorrichtung (ATD) ferner **dadurch gekennzeichnet ist, dass** der zweite Ringabschnitt (72) mit dem unteren Element (50) verbunden ist und der erste Ringabschnitt (170) mit dem Vorsprung (54) verbunden ist.

2. Anthropomorphe Testvorrichtung (ATD) nach Anspruch 1, wobei die Torsionsanordnung (48) eine Vielzahl von Rollen (73) aufweist, die zwischen dem unteren und dem oberen Element (50, 58) angeordnet sind.

3. Anthropomorphe Testvorrichtung (ATD) nach Anspruch 1, wobei der erste und der zweite Ringabschnitt (170, 72) durch eine Vielzahl von Speichenabschnitten (174) miteinander verbunden sind, die in Umfangsrichtung beabstandet sind und sich radial zwischen dem ersten Ringabschnitt (170) und dem zweiten Ringabschnitt (172) erstrecken.

4. Anthropomorphe Testvorrichtung (ATD) nach Anspruch 1 oder Anspruch 3, wobei sowohl das untere Element (50) als auch das obere Element (58) einen Hohlraum (60, 52) aufweisen, der sich jeweils axial darin erstreckt, wobei das untere Element (50) eine Nut (53) aufweist, die sich axial darin und in Umfangsrichtung um einen Boden des Hohlraums (52) des unteren Elements (50) herum erstreckt, um eine untere Rille zu bilden,
wobei das obere Element (58) eine Nut (62) aufweist, die sich axial darin und in Umfangsrichtung um ein Oberteil des Hohlraums (60) des oberen Elements (58) herum erstreckt, um eine obere Rille zu bilden, und
wobei die Torsionsbaugruppe (48) eine Vielzahl von Rollen (73) umfasst, die in der unteren Rille und der oberen Rille zwischen dem unteren Element (50) und dem oberen Element (58) angeordnet sind.

5. Anthropomorphe Testvorrichtung (ATD) nach einem der vorhergehenden Ansprüche, wobei das Torsionselement (68) durch eine Vielzahl von Stiften (70) mit dem oberen Element (58) verbunden ist.

6. Anthropomorphe Testvorrichtung (ATD) nach einem der Ansprüche 1, 2 und 4 - 5, wobei das Torsionselement (68) aus einem flexiblen Material hergestellt ist.

7. Anthropomorphe Testvorrichtung (ATD) nach einem der Ansprüche 1, 2 und 4 - 6, wobei jede der Wirbelscheiben (32) mindestens einen erhöhten Abschnitt (36) auf mindestens einer Seite davon aufweist.

8. Anthropomorphe Testvorrichtung (ATD) nach einem der Ansprüche 1, 2 und 4 - 6, wobei optional der mindestens eine erhöhte Abschnitt (36) im Allgemeinen bogenförmig ist.

9. Anthropomorphe Testvorrichtung (ATD) nach einem der Ansprüche 1, 2 und 4 - 7, wobei die Wirbelscheiben (32) ein Profil haben, das Winkel des menschlichen Halses in allen Richtungen simulieren kann.

10. Anthropomorphe Testvorrichtung (ATD) nach Anspruch 9, wobei das Profil in der Höhe variiert, wobei eine größte Höhe in der Mitte liegt und eine Höhe zu den Enden hin abnimmt.

11. Anthropomorphe Testvorrichtung (ATD) nach einem der Ansprüche 1, 2 und 4 - 10, wobei das Gelenkelement (40) mindestens eine Ausnehmung (42) auf mindestens einer Seite davon aufweist.

12. Anthropomorphe Testvorrichtung (ATD) nach Anspruch 11, wobei sich die mindestens eine Ausnehmung (42) auf einer Vorderseite des Gelenkelements (40) befindet.

13. Anthropomorphe Testvorrichtung (ATD) nach einem der Ansprüche 1, 2 und 4 - 12, wobei die Torsionsbaugruppe (48) ferner eine Vielzahl von Torsionsanschlägen (174) enthält, um den Drehbereich der Halsanordnung (28) zu begrenzen.

14. Anthropomorphe Testvorrichtung (ATD) nach Anspruch 13, wobei der Drehbereich bis zu etwa fünfzig (50) Grad beträgt.

## Revendications

1. Dispositif anthropomorphe d'essai (DAE) comprenant :
un corps ;
un assemblage formant cou (28) connecté audit corps ; et
ledit assemblage formant cou (28) comprenant une pluralité de disques intervertébraux (32) et un élément de jonction (40) disposé entre chaque paire respective desdits disques intervertébraux (32), et un assemblage de torsion (48) incluant une pièce de fond (50) couplée à l'un desdits disques intervertébraux (32) et une pièce de sommet (58) en coopération et en rotation relative avec ladite pièce de fond (50) pour permettre une rotation autour d'un axe dudit un desdits disques intervertébraux (32) pour simuler réponse à une torsion d'un cou humain,
ledit assemblage de torsion (48) inclut un élément de torsion (68) disposé entre ladite pièce de fond (50) et ladite pièce de sommet (58), et dans lequel ledit élément de torsion (68) a une première portion annulaire (170) disposée autour d'une projection (54) de ladite pièce de fond (50) et une seconde portion annulaire (72) interconnectée à et espacée radialement par rapport à ladite première portion annulaire (170) ;
le dispositif anthropomorphe d'essai (DAE) étant en outre **caractérisé en ce que** ladite seconde portion annulaire (72) est liée à ladite pièce de fond (50) et ladite première portion annulaire (170) est liée à ladite projection (54).

2. Dispositif anthropomorphe d'essai (DAE) selon la revendication 1, dans lequel ledit assemblage de torsion (48) inclut une pluralité de rouleaux (73) disposés entre desdites pièce de fond et pièce de sommet (50, 58).

3. Dispositif anthropomorphe d'essai (DAE) selon la revendication 1, dans lequel ladite première et ladite seconde portion annulaire (170, 72) sont interconnectées par une pluralité de portions en barreaux (174) espacées circonférentiellement et s'étendant radialement entre ladite première portion annulaire (170) et ladite seconde portion annulaire (172).

4. Dispositif anthropomorphe d'essai (DAE) selon la revendication 1 ou 3, dans lequel chaque pièce parmi ladite pièce de fond (50) et ladite pièce de sommet (58) a une cavité (60, 52) s'étendant respectivement axialement à l'intérieur de celle-ci,
dans lequel ladite pièce de fond (50) inclut une rainure (53) s'étendant axialement à l'intérieur de celle-ci et circonférentiellement autour d'un fond de ladite cavité (52) de ladite pièce de fond (50) pour former une piste de fond,
dans lequel ladite pièce de sommet (58) inclut une rainure (62) s'étendant axialement à l'intérieur de celle-ci et circonférentiellement autour d'un sommet de ladite cavité (60) de ladite pièce de sommet (58) pour former une piste de sommet, et
dans lequel ledit assemblage de torsion (48) inclut une pluralité de rouleaux (73) disposés dans ladite piste de fond et dans ladite piste de sommet entre ladite pièce de fond (50) et ladite pièce de sommet (58).

5. Dispositif anthropomorphe d'essai (DAE) selon l'une quelconque des revendications précédentes, dans lequel ledit élément de torsion (68) est couplé à ladite pièce de sommet (58) par une pluralité de broches (70).

6. Dispositif anthropomorphe d'essai (DAE) selon l'une quelconque des revendications 1, 2, et 4 à 5, dans lequel ledit élément de torsion (68) est fait à partir d'un matériau flexible.

7. Dispositif anthropomorphe d'essai (DAE) selon l'une quelconque des revendications 1, 2, et 4 à 6, dans lequel chacun desdits disques intervertébraux (32) inclut au moins une portion surélevée (36) sur au moins un côté de celui-ci.

8. Dispositif anthropomorphe d'essai (DAE) selon l'une quelconque des revendications 1, 2, et 4 à 6 et en option dans lequel ladite au moins une portion surélevée (36) est généralement de forme arquée.

9. Dispositif anthropomorphe d'essai (DAE) selon l'une quelconque des revendications 1, 2, et 4 à 7, dans lequel lesdits disques intervertébraux (32) ont un profile qui peut simuler des angles du cou humain dans toutes les directions.

10. Dispositif anthropomorphe d'essai (DAE) selon la revendication 9, dans lequel ledit profil varie en hauteur, avec une hauteur la plus élevée se trouvant au milieu de celui-ci et se réduisant vers des extrémités de celui-ci.

11. Dispositif anthropomorphe d'essai (DAE) selon l'une quelconque des revendications 1, 2, et 4 à 10, dans lequel ledit élément de jonction (40) inclut au moins une découpe (42) sur au moins un côté de celui-ci.

12. Dispositif anthropomorphe d'essai (DAE) selon la revendication 11, dans lequel ladite au moins une découpe (42) est sur un côté avant dudit élément de jonction (40).

13. Dispositif anthropomorphe d'essai (DAE) selon l'une quelconque des revendications 1, 2, et 4 à 12, dans lequel ledit assemblage de torsion (48) inclut en outre une pluralité de butées de torsion (174) pour limiter une plage de rotation dudit assemblage formant cou (28).

14. Dispositif anthropomorphe d'essai (DAE) selon la revendication 13, dans lequel ladite plage de rotation va jusqu'à approximativement cinquante (50) degrés.
